# EUROPÄISCHE PATENTANMELDUNG

(11) **EP 2 468 383 A1**
(43) Veröffentlichungstag der Anmeldung: **27.06.2012**
(21) Anmeldenummer: 10196596.0
(22) Anmeldetag: 22.12.2010
(51) Int. Cl.: B01D 53/00, B01D 53/44, F23G 7/06

(54) **Verfahren zur thermischen Nachverbrennung von Abgasen aus der Acrolein- und aus der Blausäureherstellung**

(71) Anmelder: Evonik Degussa GmbH, 45128 Essen (DE)
(72) Erfinder: Finkeldei, Caspar-Heinrich, Dr., 63755 Alzenau (DE); Zacchi, Pablo, 63486 Bruchköbel (DE); Körfer, Martin, 63796 Kahl (DE)

(57) **Zusammenfassung**

Verfahren zur thermischen Nachverbrennung der bei der Herstellung von Acrolein in einem Gasphasenprozess entstehenden Abgasströme und der thermischen Nachverbrennung der bei der Herstellung von Blausäure in einem Gasphasenprozess entstehenden Abgasströme, dadurch gekennzeichnet, dass die Abgasströme aus der Herstellung von Acrolein und die Abgasströme aus der Herstellung von Blausäure einer gemeinsamen thermischen Nachverbrennung zugeführt werden.

## Beschreibung

Die Erfindung betrifft ein Verfahren zur thermischen Nachverbrennung der bei der Herstellung von Acrolein in einem Gasphasenprozess entstehenden Abgasströme und der thermischen Nachverbrennung der bei der Herstellung von Blausäure in einem Gasphasenprozess entstehenden Abgasströme.

Unter einer thermischen Nachverbrennung versteht der Fachmann die Oxidation der in einer Prozessabluft bzw. in einem Prozessabgas enthaltenen brennbaren Stoffe in einem Verbrennungsvorgang, wobei für den Verbrennungsvorgang ein Zusatzbrennstoff verwendet werden kann. Der Verbrauch an Zusatzbrennstoff, beispielsweise Erdgas oder Erdöl, hängt von der Konzentration der brennbaren Stoffe in der Prozessabluft bzw. dem Prozessabgas ab. Die thermische Nachverbrennung erfolgt typischerweise bei Temperaturen von 800°C - 1200 °C und mit einer Verweilzeit von etwa 1-4 s.

Zu den Vorprodukten der Herstellung von Methionin oder Methionin Hydroxy Analog (MHA) zählen neben Methylmercaptan (Methanthiol) auch Acrolein (Propenal) und Blausäure (Cyanwasserstoff).

Die Acroleinherstellung wird hierzu heute praktisch ausnahmslos in einem Gasphasenprozess mit einem Propylen, Luft und Wasserdampfampfgemisch durchgeführt. Die dabei entstehenden acroleinhaltigen Dämpfe werden in einem zusätzlichen Prozess, beispielsweise durch Absorption, in die Flüssigphase überführt. Hierbei fällt ein großer Abgasstrom an, der entsorgt werden muss. Diese Entsorgung erfolgt in der Regel durch thermische Nachverbrennung [Beschrieben z.B. in: Acrolein, 1975, Dr. Alfred Hüthig Verlag GmbH, Heidelberg].

Bei der Acroleinsynthese fällt darüber hinaus noch ein Abasserstrom an, der bei der Synthese entstehende Nebenprodukte und Kondensat enthält. Dieser Abwasserstrom kann entweder biologisch abgebaut oder ebenfalls der thermischen Nachverbrennung zugeführt werden.

Die Acroleinherstellung ist in der folgenden Abbildung schematisch dargestellt:

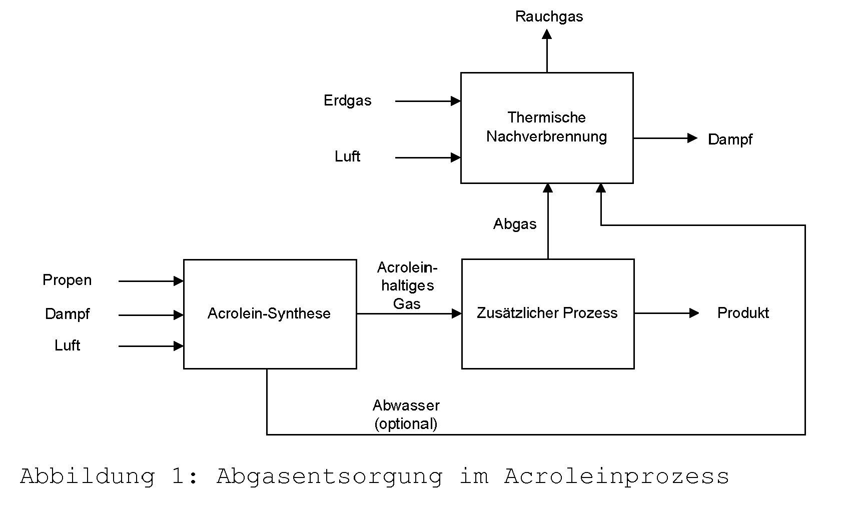

Dabei ist es hinsichtlich der Abgasentsorgung unerheblich, ob der zusätzliche Prozess eine klassische Absorber-Desorber-Einheit ist, in der Acrolein isoliert wird, oder ob es sich um einen Reaktivabsorber handelt, in dem Acrolein direkt in das nächste Zwischenprodukt Methylmercaptopropionaldehyd [3-(Methylthio)propanal] überführt werden kann.

Typischerweise enthält der anfallende Abwasser- und Abgasstrom bei der Acroleinherstellung folgende Inhaltsstoffe:

**Tab. 1: Zusammensetzung des Abgases und des Abwassers aus der Acroleinsynthese**

| **Zusammensetzung [Gew%]** | | |
|---|---|---|
| | **AC Abwasser (optional)** | **AC Abgas** |
| O2 | 0,0 | 6,2 |
| N2 | 0,0 | 90,0 |
| CO | 0,0 | 0,6 |
| CO2 | 0,0 | 2,2 |
| H2O | 80,8 | 0,5 |
| Brennbarer Rest (z.B. Propen, Acrolein, Acrylsäure) | 19,2 | 0,4 |

Zur thermischen Nachverbrennung von 1 Nm³ des unter Tabelle 1 angegebenen Abgasstromes werden etwa 1 Nm³ Luft und 0,07 Nm³ Erdgas benötigt. Die dabei entstehende Wärme kann zur Dampfproduktion genutzt werden.

Nachteil der thermischen Nachverbrennung des bei der Herstellung von Acrolein anfallenden Abgasstromes ist zum einen der Verbrauch von Zusatzbrennstoff in Form von Erdgas oder alternativ Erdöl und die erforderliche Menge an Luft. Luft besteht zu ca. 78% aus Stickstoff, wobei Stickstoff keinen Brennwert aufweist. Für die thermische Nachverbrennung des bei der Herstellung von Acrolein anfallenden Abgasstromes werden große Stickstoffmengen eingetragen, die erwärmt werden müssen und daher einen Verlust von Wärme darstellen, der nicht mehr vollständig für die Dampfproduktion zur Verfügung steht.

Wie eingangs erwähnt gehört zu den Vorprodukten der Methioninherstellung auch die Blausäure. Blausäure kann fallweise als Nebenprodukt aus anderen Verfahren bezogen werden, z. B. aus der Produktion von Acrylnitril. Häufig wird Blausäure aber auch gezielt als Vorprodukt für Methionin oder Methionin Hydroxy Analog hergestellt.

Die Blausäureherstellung erfolgt wiederum in Gasphasenprozessen, beispielsweise durch das Andrussow-Verfahren, bei denen ebenfalls ein großer zu entsorgender Abgasstrom anfällt. Auch hier erfolgt die Entsorgung in der Regel durch thermische Nachverbrennung [Chemie Ingenieur Technik (1970), 42(2), 63-72].

Die Blausäureherstellung ist in der folgenden Abbildung schematisch dargestellt:

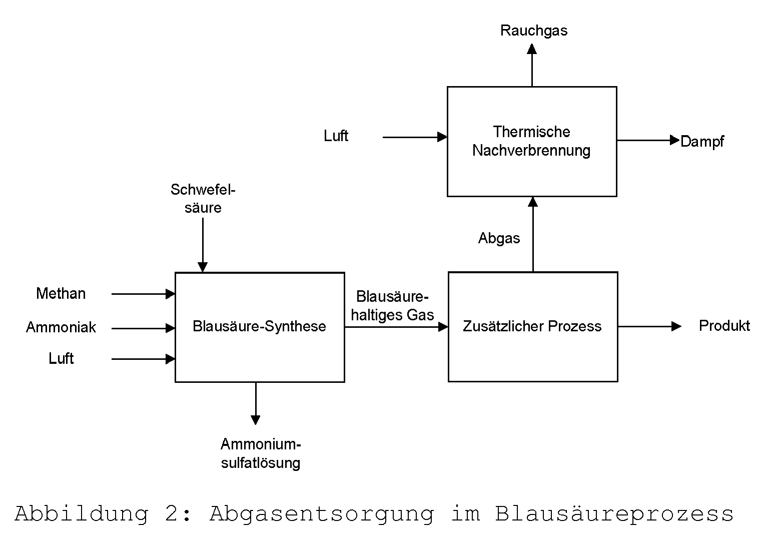

Dabei ist es hinsichtlich der Abgasentsorgung wiederum unerheblich, ob der zusätzliche Prozess eine klassische Absorber-Desorber-Einheit ist, in der Blausäure isoliert wird, oder ob es sich um einen Reaktivabsorber handelt, in dem Blausäure direkt in das nächste Zwischenprodukt Methylmercaptopropionaldehyd-Cyanhydrin [2-Hydroxy-4-(methylthio)butannitril] überführt werden kann.

Typischerweise enthält der bei der Blausäureherstellung anfallende Abgasstrom folgende Inhaltsstoffe:

**Tab. 2: Zusammensetzung des Abgases aus der Blausäureherstellung**

| **Zusammensetzung [Gew%]** | |
|---|---|
| | **HCN Abgas** |
| O2 | 0,5 |
| N2 | 89,1 |
| CO | 7,0 |
| CO2 | 0,6 |
| H2O | 0,6 |
| Brennbarer Rest (z.B. Methan, Blausäure, Wasserstoff) | 2,1 |

Zur thermischen Nachverbrennung von 1 Nm³ des unter Tabelle 2 angegebenen Abgasstromes werden ca. 0,9 Nm³/h Luft benötigt. Aufgrund des relativ hohen Anteiles thermisch verwertbarer Substanzen im Abgasstrom, wie z.B. Methan oder Wasserstoff, ist eine zusätzliche Zuführung von Erdgas für die thermische Nachverbrennung des Abgases aus der Blausäureherstellung, abgesehen von einer sogenannten Stützflamme, nicht notwendig. Die bei der thermischen Nachverbrennung entstehende Wärme kann ebenfalls zur Dampfproduktion genutzt werden.

Die thermische Nachverbrennung des bei der Herstellung von Blausäure anfallenden Abgasstromes erfordert zwar keinen Zusatzbrennstoff (abgesehen von der Stützflamme), dennoch ist die erforderliche Menge an Luft von Nachteil. Luft besteht zu ca. 78% aus Stickstoff, wobei Stickstoff keinen Brennwert aufweist. Für die thermische Nachverbrennung des bei der Herstellung von Blausäure anfallenden Abgasstromes werden große Stickstoffmengen eingetragen, die erwärmt werden müssen und die daher einen Wärmeverlust für die Dampfproduktion darstellen.

Darüber hinaus sind die Abgasvolumenströme aus der Acroleinherstellung und der Blausäureherstellung jeweils relativ groß und deshalb teuer in der Entsorgung.

Aufgabe der vorliegenden Erfindung ist es daher, ein Verfahren zur thermischen Nachverbrennung von Abgasen aus der Acrolein- und aus der Blausäureherstellung zur Verfügung zur stellen, bei welchem die Nachteile des Standes der Technik zumindest verringert sind.

Diese Aufgabe wird gelöst durch ein Verfahren zur thermischen Nachverbrennung der bei der Herstellung von Acrolein in einem Gasphasenprozess entstehenden Abgasströme und der thermischen Nachverbrennung der bei der Herstellung von Blausäure in einem Gasphasenprozess entstehenden Abgasströme, dadurch gekennzeichnet, dass die Abgasströme aus der Herstellung von Acrolein und die Abgasströme aus der Herstellung von Blausäure einer gemeinsamen thermischen Nachverbrennung zugeführt werden.

Die Abgasströme werden damit nicht getrennt in separaten Verfahren entsorgt, sondern beide Abgasströme werden in einer einzigen thermischen Nachverbrennung behandelt. Die thermische Nachverbrennung der Abgasströme aus der Acroleinherstellung und aus der Blausäureherstellung erfolgt auch nicht zeitlich aufeinanderfolgend, sondern zumindest teilweise zeitlich parallel, d.h. in zeitlicher Übereinstimmung.

Bevorzugt werden die Abgasströme mit der größtmöglichen zeitlichen Überlappung der thermischen Nachverbrennung zugeführt. Dazu können die Abgasströme aus der Acroleinherstellung und die Abgasströme aus der Blausäurehertellung zunächst zusammengeführt und gemeinsam der thermischen Nachverbrennung zugeführt werden oder parallel jeder Abgasstrom getrennt zugeführt werden, vorausgesetzt, dass dies nicht zeitlich aufeinanderfolgend, sondern zumindest teilweise zeitlich parallel, d.h. in zeitlicher Übereinstimmung erfolgt.

In einer bevorzugten Ausführungsform des Verfahrens gemäß der vorliegenden Erfindung wird nicht nur der bei der Acroleinherstellung entstehende Abgasstrom, sondern auch der anfallende Abwasserstrom der thermischen Nachverbrennung zugeführt. Dadurch kann eine biologische Aufbereitungsstufe für das anfallende Abwasser entfallen.

Eine gemeinsame Verbrennungsanlage für beide Prozessabgase würde aufgrund von Skalierungseffekten bereits die üblichen Einsparungen beim Investment für eine solche Anlage bieten, da nicht zwei Verbrennungsanlagen, sondern nur eine einzelne, aber dafür entsprechend größer dimensionierte Verbrennungsanlage gebaut werden muss.

Völlig überraschend hat sich jedoch gezeigt, dass eine gemeinsame thermische Nachverbrennung weitere wesentliche Vorteile bringt.

Durch die gemeinsame thermische Nachverbrennung wird ein geringerer Eintrag von Luft ermöglicht. Dadurch werden geringere Mengen Stickstoff, die keinen Brennwert aufweisen, eingetragen. Es muss weniger Stickstoff aus der Luft erwärmt werden müssen, was zu einem geringeren Wärmeverlust führt. Damit steigt die Dampfproduktion bezogen auf den eingesetzten Zusatzbrennstoff.

Die Einsparung von Verbrennungsluft liegt in der Zusammensetzung der zwei Abgasströme begründet. Der Abgasstrom aus der Acroleinherstellung hat relativ wenig Brennwert, enthält aber noch signifikante Konzentrationen an Restsauerstoff (s. Tabelle 1). Der Abgasstrom aus der Blausäureherstellung enthält überschüssigen Brennwert, aber praktisch keinen Sauerstoff mehr (s. Tabelle 2). Ein Teil des für die Verbrennung des Abgases aus der Blausäureherstellung erforderlichen Sauerstoffes kann durch die gemeinsame thermische Nachverbrennung durch den Abgasstrom aus der Acroleinherstellung bereit gestellt werden. Da weniger Verbrennungsluft benötigt wird, kann bei der gemeinsamen thermischen Nachverbrennung auch ein geringeres Brennkammervolumen eingesetzt werden, als dies bei einer einfachen Zusammenlegung ohne synergistische Effekte möglich gewesen wäre.

Ein weiterer Vorteil des erfindungsgemäßen Verfahrens ist die Einsparung von Zusatzbrennstoff. Da der Abgasstrom aus der Blausäureherstellung überschüssigen Brennwert enthält, ersetzt der Abgasstrom aus der Blausäureherstellung zumindest teilweise die Zuführung von Zusatzbrennstoff

Bevorzugt zeichnet sich das erfindungsgemäße Verfahren dadurch aus, dass die bei der Herstellung von Blausäure in einem Gasphasenprozess entstehenden Abgasströme, Abgasströme aus dem Andrussow Verfahren sind. Das Andrussow Verfahren ist dem Fachmann bekannt und beispielsweise in Ullmann's Encyclopedia of Industrial Chemistry, sixth Edition, Volume 10, page 194 beschrieben. In einer weiteren bevorzugten Ausführungsform des erfindungsgemäßen Verfahrens sind die bei der Herstellung von Blausäure in einem Gasphasenprozess entstehenden Abgasströme, Abgasströme aus dem BMA (Blausäure aus Methan und Ammoniak) Verfahren. Auch dieses Verfahren ist dem Fachmann bekannt und beispielsweise auch in Ullmann's Encyclopedia of Industrial Chemistry, sixth Edition, Volume 10, page 194 beschrieben.

Bevorzugt zeichnet sich das erfindungsgemäße Verfahren auch dadurch aus, dass die bei der Herstellung von Acrolein in einem Gasphasenprozess entstehenden Abgasströme, Abgasströme aus der Gasphasenoxidation von Propylen zu Acrolein sind.

Ebenfalls bevorzugt zeichnet sich das erfindungsgemäße Verfahren auch dadurch aus, dass die bei der Herstellung von Acrolein in einem Gasphasenprozess entstehenden Abgasströme, Abgasströme aus der Gasphasen-Partialoxidation von Propan zu Acrolein sind.

Besonders bevorzugt ist es, dass die Abgasströme aus der Acroleinherstellung und der Blausäureherstellung in guter zeitlicher Übereinstimmung auftreten, so dass die Vorteile der gemeinsamen Verbrennung umfangreich genutzt werden können, ohne dass dafür ein Zwischenspeicher für die Abgasströme notwendig ist. Das erfindungsgemäße Verfahren zeichnet sich daher bevorzugt dadurch aus, dass die Herstellung von Acrolein und die Herstellung von Blausäure zeitlich parallel stattfindet und damit die Abgasströme aus der Herstellung von Acrolein und der Herstellung von Blausäure ebenfalls zeitlich parallel anfallen. Zur optimalen Nutzung der Vorteile einer gemeinsamen Entsorgung der Prozessabgase ist die Errichtung und der Betrieb an einem gemeinsamen Standort (Verbundstandort) besonders bevorzugt. Das erfindungsgemäße Verfahren zeichnet sich daher weiterhin bevorzugt dadurch aus, dass die Herstellung von Acrolein und die Herstellung von Blausäure an einem Standort stattfindet und damit die Abgasströme aus der Herstellung von Acrolein und der Herstellung von Blausäure ebenfalls an einem Standort anfallen. Der Transport der Abgasströme ist dadurch minimiert und die Abgasströme können direkt der thermischen Nachverbrennung zugeführt werden.

In einer ganz besonders bevorzugten Ausführungsform des erfindungsgemäßen Verfahrens fallen die Abgasströme aus der Acroleinherstellung und der Blausäureherstellung in guter zeitlicher Übereinstimmung, d.h. zeitlich parallel und an einem Standort an.

In der folgenden Abbildung 3 ist diese besonders bevorzugte Ausführungsform des erfindungsgemäßen Verfahrens schematisch dargestellt.

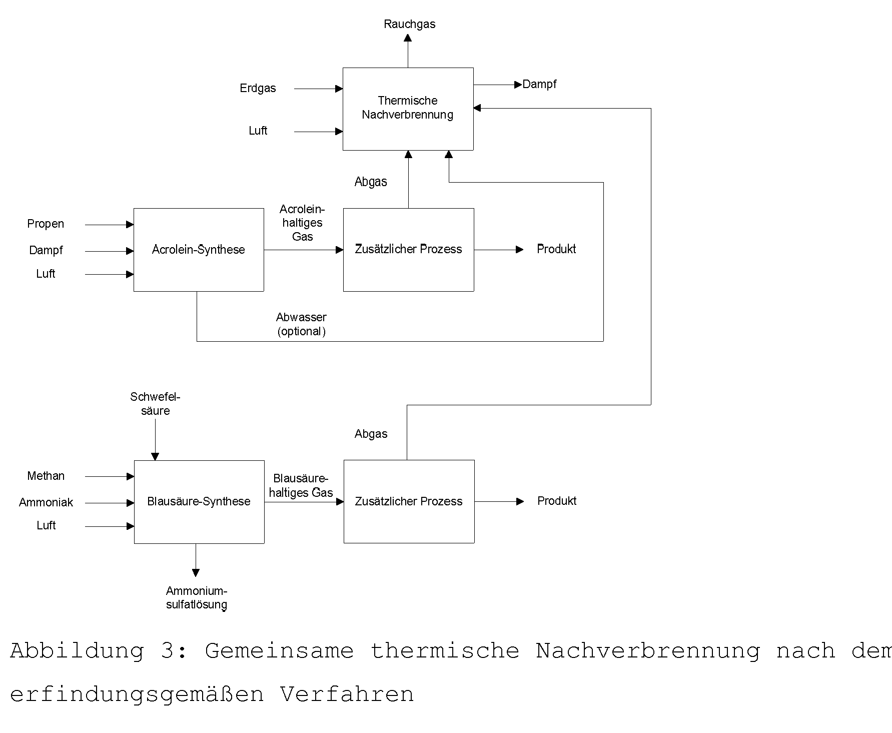

In Abbildung 3 ist die Verbrennung von Abwasser aus der Acroleinherstellung mit angegeben. Das ist optional. Die Vorteile des erfindungsgemäßen Verfahrens treten auch dann auf, wenn das Abwasser des Acrolein-Prozesses getrennt von der thermischen Nachverbrennung entsorgt wird, beispielsweise in einer biologischen Abwasserbehandlung.

Weitere Optionen betreffen den in Abbildung 3 mit "Zusätzlicher Prozess" bezeichneten Prozessschritt. Im Sinne der Erfindung ist es unerheblich, ob dieser zusätzliche Prozess eine klassische Absorber-Desorber-Einheit ist, in der Acrolein bzw. Blausäure isoliert wird, oder ob es sich um einen Reaktivabsorber handelt, in dem Acrolein bzw. Blausäure direkt in das nächste Zwischenprodukt überführt werden kann.

Insbesondere bei der Verwendung von Acrolein und Blausäure als Vorprodukte für die chemische Synthese von Methionin oder Methionin Hydroxy Analog (MHA) lässt sich das erfindungsgemäße Verfahren besonders vorteilhaft einsetzen.

Die Vorprodukte Acrolein und Blausäure sind über das Endprodukt Methionin oder Methionin Hydroxy Analog (MHA) miteinander gekoppelt. Die Acroleinherstellung und die Blausäureherstellung erfolgt hier parallel an einem gemeinsamen Standort, damit fallen die Abgasströme aus der Acroleinherstellung und aus der Blausäureherstellung auch zeitlich parallel an.

Hinzu kommt, dass sich aufgrund der Stöchiometrie der Methioninsynthese für die Edukte Acrolein und Blausäure Mengenströme und damit auch Abgasströme ergeben, die sich in günstiger Weise im Hinblick auf gemeinsame thermische Nachverbrennung ergänzen.

Das erfindungsgemäße Verfahren ist daher bevorzugt dadurch gekennzeichnet, dass die thermische Nachverbrennung im Rahmen eines integrierten Verfahrens zur chemischen Synthese von Methionin oder Methionin Hydroxy Analog (MHA) durchgeführt wird.

Die Vorteile der vorliegenden Erfindung werden an dem folgenden Ausführungsbeispiel näher erläutert.

Bei der Herstellung von Acrolein (ca. 8 t/h) durch Gasphasenoxidation von Propylen zu Acrolein fällt ein Abwasser- und Abgasstrom mit folgenden Inhaltsstoffen und Mengen an:

**Tab. 3: Zusammensetzung und Massenstrom des Abgases und des Abwassers aus der Acroleinsynthese.**

| **Massenstrom [kg/h]** | | |
|---|---|---|
| | **AC Abwasser (optional)** | **AC Abgas** |
| O2 | 0 | 1850 |
| N2 | 0 | 26988 |
| CO | 0 | 180 |
| CO2 | 0 | 674 |
| H2O | 5630 | 149 |
| Brennbarer Rest (z.B. Propen, Acrolein, Acrylsäure) | 1335 | 132 |
| | 6965 | 29974 |

Zur thermischen Nachverbrennung des unter Tabelle 3 angegebenen Abgasstromes wurden ca. 29550 Nm³/h Luft und 1929 Nm³/h Erdgas benötigt. Die dabei entstehende Wärme wurde zur Dampfproduktion genutzt, wobei bei den eingesetzten Mengen ca. 31 t/h Dampf (20bar) produziert wurden.

Bei der Herstellung von Blausäure (ca. 4 t/h) in einem Gasphasenprozess nach dem Andrussow Verfahren fällt ein Abgasstrom mit folgenden Inhaltsstoffen und Mengen an:

**Tab. 4: Zusammensetzung des Abgases aus der Blausäureherstellung**

| **Massenstrom [kg/h]** | |
|---|---|
| | **HCN Abgas** |
| O2 | 152 |
| N2 | 27075 |
| CO | 2120 |
| CO2 | 197 |
| H2O | 186 |
| Brennbarer Rest (z.B. Methan, Blausäure, Wasserstoff) | 646 |
| | 30376 |

Zur thermischen Nachverbrennung des unter Tabelle 4 angegebenen Abgasstromes wurden ca. 27365 Nm³/h Luft benötigt. Aufgrund der im Abgasstrom enthaltenen thermisch verwertbarer Substanzen, wie z.B. Methan oder Wasserstoff, war eine zusätzliche Zuführung von Erdgas für die thermische Nachverbrennung des Abgases aus der Blausäureherstellung nicht notwendig. Die bei der thermischen Nachverbrennung entstehende Wärme wurde zur Dampfproduktion genutzt, wobei bei den eingesetzten Mengen ca. 29,4 t/h Dampf (20bar) produziert werden konnten.

Die gesamten Inhaltsstoffe und Mengenströme, die der gemeinsamen Nachverbrennung gemäß der vorliegenden Erfindung zugeführt wurden sind in Tabelle 5 dargestellt.

**Tab. 5: Gesamtheit der gemeinsamen thermischen Nachverbrennung zugeführte Abgas- und Abwasserströme.**

| **Massenstrom [kg/h]** | | | |
|---|---|---|---|
| | **AC Abwasser (optional)** | **AC Abgas** | **HCN Abgas** |
| O2 | 0 | 1850 | 152 |
| N2 | 0 | 26988 | 27075 |
| CO | 0 | 180 | 2120 |
| CO2 | 0 | 674 | 197 |
| H2O | 5630 | 149 | 186 |
| Brennbarer Rest (z.B. Propen, Acrolein, Acrylsäure, Methan, Blausäure, Wasserstoff) | 1335 | 132 | 646 |
| | 6965 | 29974 | 30376 |

Die thermische Verbrennung erfolgte in jedem Fall mit einem Restsauerstoffgehalt von 3 Vol%. Die Verweilzeit betrug jeweils ca. 2 s. Eine Feedgasvorwärmung erfolgte nicht. Unter Feedgas sind alle Gase, die der thermischen Nachverbrennung zugeführt werden zu verstehen, d.h. nicht nur die Prozessabgase, sondern auch die Verbrennungsluft und der Zusatzbrennstoff. Die Verbrennungstemperatur betrug ca. 1130 °C im Fall der Verbrennung des Abgases aus der Blausäureherstellung (Tab. 4). In den beiden anderen Fällen (Tab. 3 und Tab. 5) betrug die Verbrennungstemperatur übereinstimmend 950 °C.

Zur gemeinsamen thermischen Nachverbrennung der unter Tabelle 5 angegebenen Abwasser- und Abgasströme wurden ca. 46406 Nm³/h Luft benötigt.

Für die getrennte thermische Nachverbrennung wurden die folgende Menge Verbrennungsluft benötigt:
27365 Nm³/h + 29550 Nm³/h = 56915 Nm³/h

Die gemeinsame Verbrennung dieser beiden Prozessabgase ermöglicht nachweislich eine Reduzierung der benötigten Verbrennungsluft um 18,5 %.

Zur gemeinsamen thermischen Nachverbrennung der unter Tabelle 5 angegebenen Abwasser- und Abgasströme wurden weiterhin ca. 1158 Nm³/h Erdgas benötigt

Für die getrennte thermische Nachverbrennung wurde 1929 Nm³/h Erdgas benötigt.

Die gemeinsame Verbrennung dieser beiden Prozessabgase ermöglicht eine Reduzierung der benötigten Erdgasmenge um 40 %. Das entspricht einer Einsparung von ca. 200 Nm³_{CH4}/t_{HCN} in den im vorliegenden Ausführungsbeispiel offenbarten Stoffströmen.

Die Dampfproduktion betrug 51,1 t/h

Mit dem erfindungsgemäßen Verfahren lassen sich die nachfolgend genannten Vorteile nutzen:
1. Skalierungseffekte aufgrund der Errichtung und des Betriebs von einer gemeinsamen Entsorgungseinrichtung, anstatt üblicherweise zwei.
2. Darüber hinausgehende Vorteile der gemeinsamen Verbrennung der Prozessgase aus Acrolein und Blausäure sind:
   a. Verringerter Rauchgasvolumenstrom
   b. Verringerte Größe der Entsorgungseinrichtung, so dass sich das Investment über den o. g. Skalierungseffekt hinaus reduziert
   c. Verringerter Brennstoffverbrauch
   d. Verringerte Gebläseleistung für die Verbrennungsluft
   e. Verringerter CO2-Ausstoß
   f. Vermeidung von möglicherweise überschüssigem Prozessdampf.

## Patentansprüche

1. Verfahren zur thermischen Nachverbrennung der bei der Herstellung von Acrolein in einem Gasphasenprozess entstehenden Abgasströme und der thermischen Nachverbrennung der bei der Herstellung von Blausäure in einem Gasphasenprozess entstehenden Abgasströme, **dadurch gekennzeichnet, dass** die Abgasströme aus der Herstellung von Acrolein und die Abgasströme aus der Herstellung von Blausäure einer gemeinsamen thermischen Nachverbrennung zugeführt werden.

2. Verfahren nach Anspruch 1, **dadurch gekennzeichnet, dass** die bei der Herstellung von Blausäure in einem Gasphasenprozess entstehenden Abgasströme, Abgasströme aus dem Andrussow Verfahren sind.

3. Verfahren nach Anspruch 1, **dadurch gekennzeichnet, dass** die bei der Herstellung von Blausäure in einem Gasphasenprozess entstehenden Abgasströme, Abgasströme aus dem BMA -Blausäure aus Methan und Ammoniak-Verfahren sind.

4. Verfahren nach Anspruch 1, **dadurch gekennzeichnet, dass** die bei der Herstellung von Acrolein in einem Gasphasenprozess entstehenden Abgasströme, Abgasströme aus dem Verfahren Gasphasenoxidation von Propylen zu Acrolein sind.

5. Verfahren nach einem oder mehreren der Ansprüche 1 bis 3, **dadurch gekennzeichnet, dass** die Herstellung von Acrolein und die Herstellung von Blausäure zeitlich parallel stattfindet und damit die Abgasströme aus der Herstellung von Acrolein und der Herstellung von Blausäure ebenfalls zeitlich parallel anfallen.

6. Verfahren nach einem oder mehreren der Ansprüche 1 bis 4, **dadurch gekennzeichnet, dass** die Herstellung von Acrolein und die Herstellung von Blausäure an einem Standort stattfindet und damit die Abgasströme aus der Herstellung von Acrolein und der Herstellung von Blausäure ebenfalls an einem Standort anfallen.

7. Verfahren nach Anspruch 4 oder 5, **dadurch gekennzeichnet, dass** die thermische Nachverbrennung im Rahmen eines integrierten Verfahrens zur chemischen Synthese von Methionin oder Methionin Hydroxy Analog (MHA) durchgeführt wird.
